# FASCICULE DE BREVET EUROPEEN

(11) **EP 3 532 366 B1**
(45) Date de publication et mention de la délivrance du brevet: **13.04.2022**
(21) Numéro de dépôt: 17791051.0
(22) Date de dépôt: 24.10.2017
(51) Int. Cl.: B62D 59/02, F16H 61/4078

(54) **SYSTÈME D'ASSISTANCE À L'ENTRAÎNEMENT DE VÉHICULE COMPRENANT UN CIRCUIT HYDRAULIQUE OUVERT**
SYSTEM ZUR UNTERSTÜTZUNG DES FAHRENS EINES FAHRZEUGS MIT OFFENEM HYDRAULIKKREIS
SYSTEM FOR ASSISTING THE DRIVING OF A VEHICLE COMPRISING AN OPEN HYDRAULIC CIRCUIT

(30) Priorité: 25.10.2016 FR 1660330
(43) Date de publication de la demande: 04.09.2019
(73) Titulaire: Poclain Hydraulics Industrie, 60410 Verberie (FR)
(72) Inventeur: ERZNOZNIK, Matej, 60410 Verberie (FR)
(74) Mandataire: Regimbeau
(86) Numéro de dépôt international: PCT/EP2017/077178
(87) Numéro de publication internationale: WO 2018/077883

(56) Documents cités:
- EP-A1- 0 399 932
- EP-A1- 0 993 982
- EP-A1- 2 361 798
- WO-A1-2014/048842
- FR-A1- 3 022 860

## Description

La présente invention concerne le domaine des circuits d'assistance dans l'entraînement de véhicules.

Plus précisément, la présente invention s'applique aux circuits hydrauliques de type ouvert, c'est-à-dire dans lesquels une pompe hydraulique d'alimentation du circuit aspire de l'huile dans un réservoir et le retour d'huile en sortie du circuit d'alimentation est renvoyé au réservoir (par opposition aux circuits dits fermés dans lesquels généralement une pompe de gavage est requise pour assurer le maintien d'une pression minimale dans le circuit).

La présente invention s'applique en particulier à l'entraînement de remorques.

On a déjà proposé de nombreux systèmes hydrauliques d'assistance à l'entraînement de véhicules, notamment de remorques.

On trouvera des exemples de systèmes connus dans les documents FR 2379394, EP 0399932, EP 0993982, FR 2935128 et WO2012/123056.

On trouvera également dans le document FR 3 022 860 un exemple de réalisation d'une transmission combinant une pompe et des moteurs hydrauliques pour une assistance à entraînement de véhicules dans un circuit hydraulique de type fermé.

Un certain nombre des systèmes déjà proposés donne globalement satisfaction.

Cependant, la plupart des systèmes connus sont assez complexes et onéreux.

Un objectif principal de la présente invention est de proposer un système permettant une assistance à l'entraînement de véhicules à partir d'un circuit ouvert à deux lignes, respectivement d'alimentation et de retour, utilisant des moteurs hydrauliques et autorisant une fonction roue libre.

Le but précité est atteint selon la présente invention, grâce à un système d'assistance à l'entraînement selon la revendication 1 **comprenant** au moins une machine hydraulique formant pompe (19), au moins une machine hydraulique formant moteur (130, 140) et un circuit hydraulique (100) comprenant un conduit d'alimentation (15) allant de la sortie de la pompe (19) vers l'entrée de la machine hydraulique formant moteur (130, 140) et un conduit de retour (122) lié à la sortie de la machine hydraulique formant moteur (130, 140), dans lequel le circuit hydraulique est un circuit ouvert passant par un réservoir (13), que le circuit hydraulique comprend un conduit d'aspiration (11) allant du réservoir (13) vers une entrée de la pompe (19), et le conduit de retour (122) va de la sortie de la machine hydraulique formant moteur (130, 140) vers le réservoir (13), et qu'au moins l'un des moteurs (130, 140) est un moteur débrayable et par le fait que le système comprend un élément formant restriction (180) et créant une perte de charge sur le conduit retour et un moyen (190, 192) adapté pour relier au carter du moteur, la partie du conduit retour (122) située en amont de l'élément formant restriction (180) et appliquer au carter du moteur, à partir du conduit de retour (122), une pression inférieure à la pression de ce conduit de retour.

Comme on le comprendra à la lecture de la description qui va suivre, l'invention permet d'éviter la nécessité d'une pompe de gavage. Elle procède en appliquant sur le carter des machines formant moteur, une pression réduite inférieure à la pression présente sur le conduit de retour.

Selon d'autres caractéristiques avantageuses de l'invention :
- le moyen adapté pour relier la partie du conduit de retour située en amont de l'élément formant restriction et appliquer au carter du moteur, à partir de ce conduit de retour, une pression inférieure à la pression de ce conduit de retour, comprend un piquage de débit sur le conduit de retour qui comporte une restriction de limitation secondaire et un clapet de fuite.
- le système comprend en outre un clapet de recirculation qui relie les lignes d'alimentation et de retour de la machine hydraulique formant moteur, au carter du moteur, en position non alimentée du moteur.

L'invention concerne également un procédé de gestion d'un circuit d'assistance à l'entraînement d'un véhicule.

L'invention concerne également les véhicules équipés du système précité.

D'autres caractéristiques, buts et avantages de la présente invention apparaîtront à la lecture de la description détaillée qui va suivre et en regard des dessins annexés donnés à titre d'exemples non limitatifs et sur lesquels :
- la figure 1 représente une vue schématique de la structure de l'ensemble d'un circuit hydraulique conforme à la présente invention,
- la figure 2 représente une vue de cet ensemble conforme à la présente invention, en position de repos,
- les figures 3 et 4 représentent le même ensemble respectivement en position d'alimentation d'un vérin et de décharge du vérin,
- la figure 5 représente une vue de cet ensemble en position de sélection de l'assistance, avant activation de celle-ci,
- la figure 6 représente une vue de cet ensemble en position de sélection et d'activation de l'assistance,
- la figure 7 représente l'état de l'ensemble lors de la phase de désactivation de l'assistance,
- la figure 8 représente une vue de cet ensemble en position de sélection et d'activation de l'assistance en marche arrière, et
- la figure 9 représente une vue schématique en coupe transversale d'un moteur à pistons radiaux utilisé de préférence dans le cadre de la présente invention.

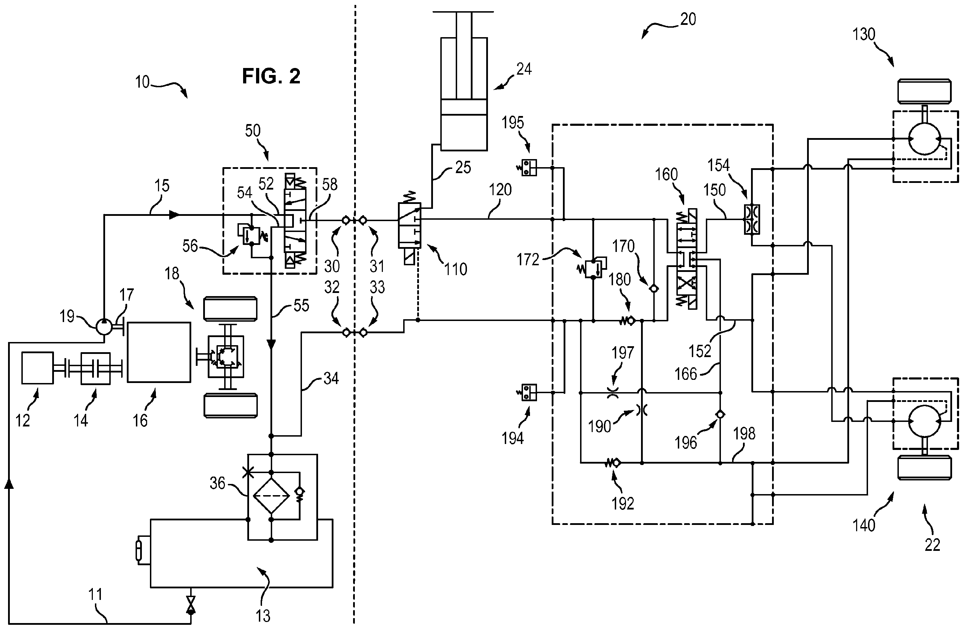

Sur les figures 2 à 8 on a représenté schématiquement par des flèches sur les conduits concernés le sens de circulation de l'huile.

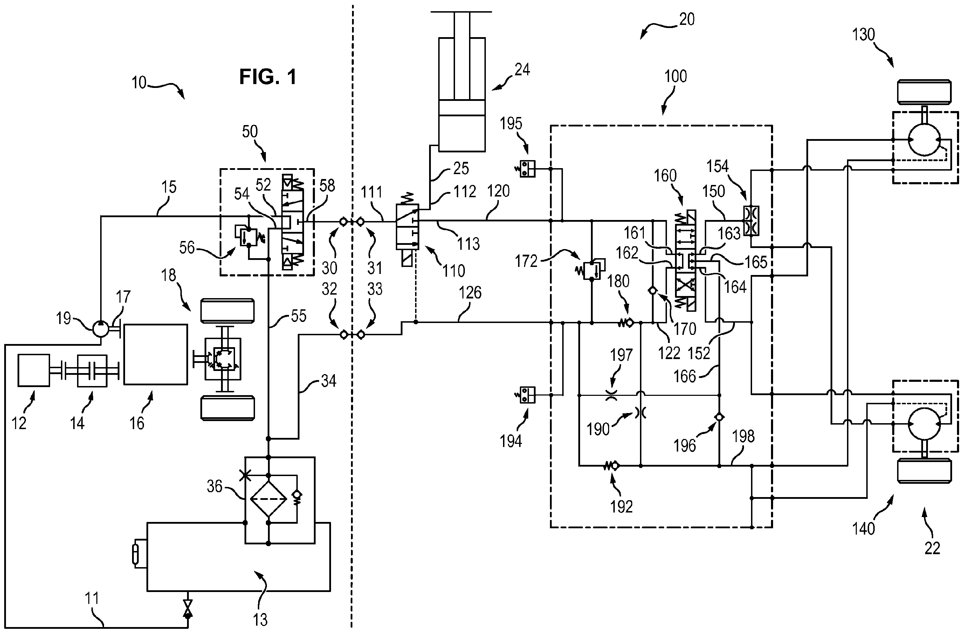

On aperçoit sur la figure 1, un véhicule tracteur référencé schématiquement 10 et une remorque référencée schématiquement 20.

Le véhicule tracteur 10 comprend un moteur principal 12, par exemple un moteur thermique, un embrayage 14 associé au moteur 12 et une boîte de vitesse 16 reliée à la sortie de l'embrayage et intercalée entre l'embrayage 14 et un essieu moteur 18.

On aperçoit également sur la figure 1, une prise de force 17 entrainée directement ou indirectement par le moteur principal 12 et placée à cette fin soit sur une sortie du moteur 12, soit en sortie de la boîte de vitesse 16 et une machine hydraulique formant pompe 19 entraînée par la prise de force 17.

Le véhicule tracteur 10 comprend de plus un réservoir 13, un conduit d'aspiration 11 qui relie le réservoir 13 à l'entrée de la pompe 19, un conduit d'alimentation 15 relié entre la sortie de la pompe 19 et un distributeur de sélection 50, un connecteur d'alimentation 30 et un conduit de retour 34 placé entre un connecteur de retour 32 et le réservoir 13. Le véhicule tracteur 10 peut également comprendre un filtre 36 placé sur le conduit retour 34.

Le distributeur 50 est un distributeur 3 voies, 3 positions.

Une première entrée 52 du distributeur 50 est reliée au conduit d'alimentation 15.

Une deuxième entrée 54 du distributeur 50 est reliée au réservoir 13 par l'intermédiaire d'un conduit 55.

Un limiteur de pression 56 peut être placé entre les entrées 52 et 54.

La sortie 58 est reliée au connecteur d'alimentation 30.

Dans une première position du distributeur 50, les deux entrées 52 et 54 sont reliées entre elles. Comme on le voit sur la figure 2 dans cette position le débit de la pompe 19 est redirigé directement vers le réservoir 19 par le conduit 55.

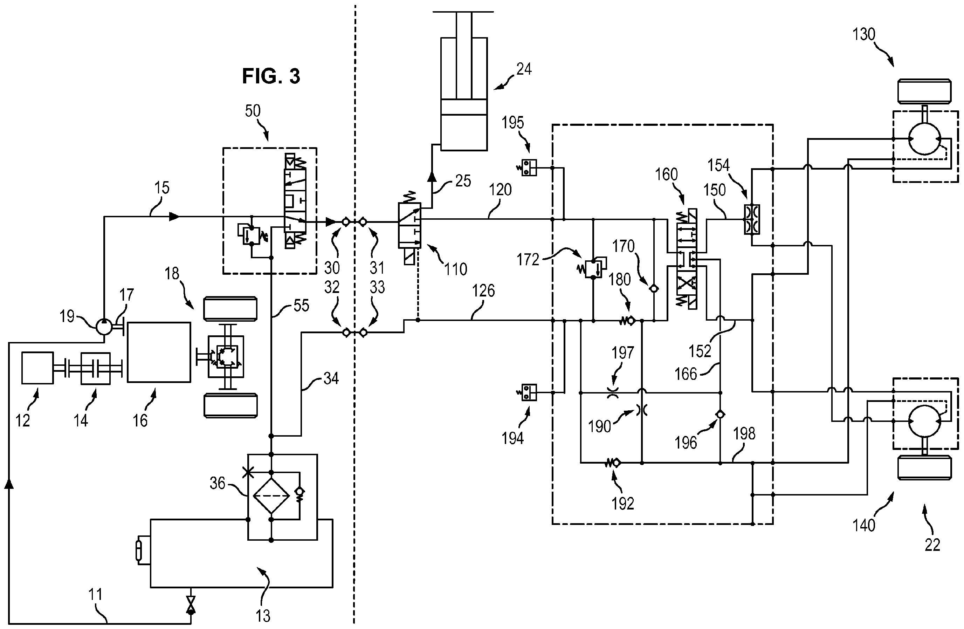

Dans une deuxième position du distributeur 50, la première entrée 52 est reliée à la sortie 58. Comme on le voit sur les figures 3 et 5 à 8, dans cette position le débit de la pompe 19 peut être utilisé pour alimenter un vérin ou alimenter l'assistance.

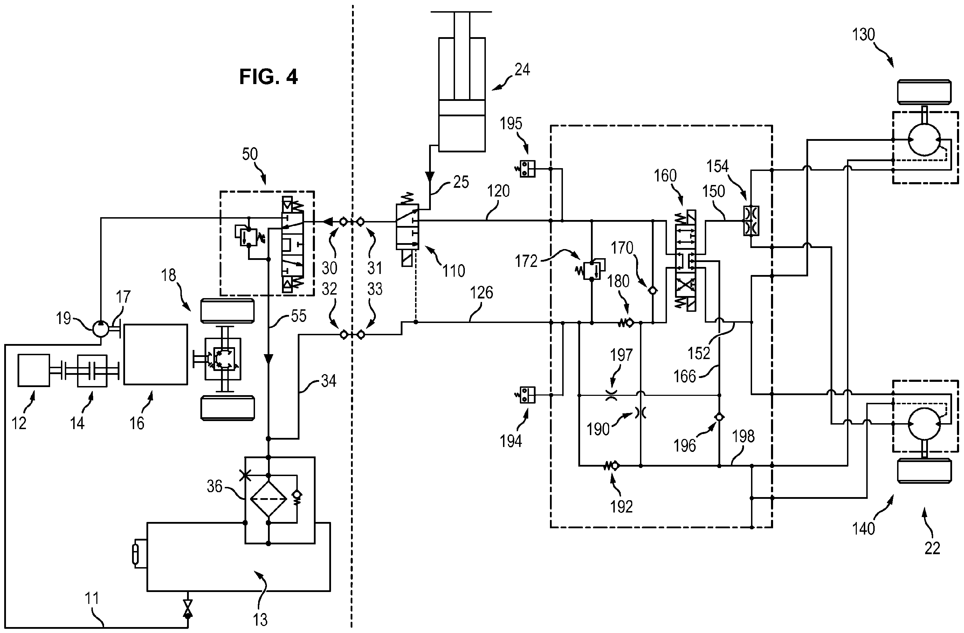

Dans une troisième position du distributeur 50, la deuxième entrée 54 est reliée à la sortie 58. Comme on le voit sur la figure 4, dans cette position le vérin précité, référencé 24 peut être vidangé vers le réservoir 13.

De façon connue en soi, la remorque 20 comprend un vérin 24, par exemple un vérin assurant une fonction de bennage, levage, stabilisation ou autre fonction accessoire. Le vérin 24 est associé à un conduit d'alimentation 25. Le conduit d'alimentation 25 est relié à un connecteur d'alimentation 31 destiné à venir en prise, en liaison hydraulique, avec le connecteur 30 précité.

Ainsi, lorsque la pompe 19 est activée et que le distributeur 50 est en deuxième position comme illustré sur la figure 3, le vérin 24 est alimenté par l'intermédiaire des liaisons 15 et 25 et les connecteurs 30, 31.

Lorsque le distributeur 50 est commuté en troisième position, le vérin 24 peut se décharger via la ligne 25, les connecteurs 31, 30 et la ligne 55, vers le réservoir 13, comme illustré sur la figure 4.

Dans le cadre de la présente invention, le dispositif précité permettant l'alimentation d'un vérin 24 sur la remorque 20 à l'aide d'un circuit hydraulique ouvert, comprend en outre un circuit d'assistance à l'entraînement 100 et un distributeur 110 permettant une sélection entre l'alimentation du vérin 24 précité ou le circuit d'assistance 100.

Le distributeur 110 est de préférence de type trois voies, deux positions.

Une entrée 111 du distributeur 110 est reliée au connecteur 31. Deux sorties 112, 113 du distributeur 110 sont reliées respectivement au conduit d'alimentation 25 du vérin 24 et à une ligne d'alimentation 120 du circuit d'assistance 100.

Dans une première position du distributeur 110, l'entrée 111 est reliée à la sortie 112. Le vérin 24 est alors alimenté, tandis que le circuit d'entraînement d'assistance à l'entraînement 100 n'est pas alimenté.

Dans la seconde position du distributeur 110, inversement, l'entrée 111 est reliée à la sortie 113. Dans ce cas le vérin 24 n'est pas alimenté et au contraire le circuit d'assistance à l'entraînement 100 est alimenté par la ligne d'alimentation et les connecteurs 30, 31.

Les moyens qui viennent d'être décrits ci-dessus peuvent faire l'objet de variantes de réalisation.

Ainsi par exemple en variante l'on peut omettre le distributeur de sélection 50 qui permet notamment, entre sa deuxième position et sa troisième position, de choisir entre l'alimentation ou la décharge du vérin 24, en associant si nécessaire un conduit de décharge additionnel au vérin 24, lequel conduit de décharge additionnel est relié par des moyens adaptés au conduit de retour 34 qui aboutit au réservoir 13.

Le circuit d'assistance à l'entraînement 100 comprend au moins deux moteurs 130, 140 associés respectivement aux roues droite et gauche de l'essieu 22.

Les machines hydrauliques formant les moteurs 130, 140 sont de préférence des moteurs à pistons radiaux du type illustré sur la figure 3 annexée.

De préférence, les machines hydrauliques formant moteurs 130, 140 sont plus précisément des moteurs à pistons rétractables.

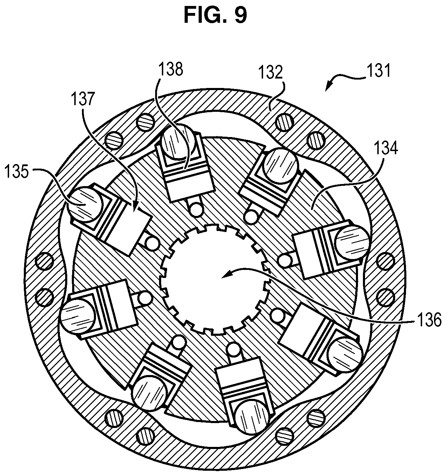

La structure de tels moteurs 130, 140, est bien connue en soi de l'homme de l'art et ne sera donc pas décrite dans le détail par la suite. La société POCLAIN HYDRAULICS fabrique et commercialise elle-même de nombreux moteurs à pistons radiaux du type schématisé sur la figure 9 annexée.

On rappelle cependant, que de préférence, les moteurs hydrauliques à pistons radiaux du type illustré sur la figure 9 comprennent dans un carter 131 :
- une came multi-lobes 132 formée de préférence sur la surface interne d'un élément du carter,
- un bloc cylindres 134 monté à rotation relative dans le carter 131,
- un arbre 136 lié à rotation au bloc cylindres 134,
- des pistons 138 guidés à coulissement radial dans des cylindres respectifs 137 du bloc cylindres et prenant appui sur les lobes de la came 132, de préférence par l'intermédiaire de galets 135.

Les moteurs à pistons radiaux du type illustré sur la figure 9 comprennent également (non représenté sur la figure 9) un distributeur adapté pour appliquer successivement de manière contrôlée un fluide sous pression dans les cylindres 137 et par conséquent sur les pistons 138, de sorte que l'appui successif des pistons 138, par l'intermédiaire des galets 135, sur les lobes de la came 132 entraine la rotation relative du bloc cylindre 134 et des éléments qui lui sont liés par rapport au carter 131.

Pour être débrayables, les pistons 138 et galets associés 135 doivent être rétractés dans les cylindres 137 de sorte que les galets 135 échappent à la came 132.

La rétractation des galets 135 et pistons 138 associés, pour obtenir le débrayage des moteurs 130, 140 est opérée grâce à l'application d'une pression adéquate dans le carter du moteur, c'est-à-dire dans la chambre comprise entre la came multi-lobes 132 et l'espace extérieur du bloc cylindre 134. La pression ainsi exercée par le fluide s'applique sur les pistons 138 et rétracte ceux-ci dans les cylindres 137.

La rétractation des pistons qui correspond à une opération de décrabotage peut également être aidée par des ressorts. Ceux-ci sont généralement placés sur le côté des pistons pour tirer ceux-ci vers le centre du bloc-cylindres. La structure, la position et le fonctionnement de tels ressorts opérant une sollicitation en position rétractée des pistons sont connus en soit de l'homme du métier et ne seront donc pas décrits plus en détail par la suite. On trouvera à titre indicatif et non limitatif des informations dans les documents FR 2 426 812, FR 2 651836 et FR 2 504 987.

La rétractation des pistons 138 peut se faire uniquement par une pression de carter, ou conjointement par une pression de carter et la sollicitation de ressorts, par exemple en appliquant une pression de carter au moment de la rentrée des pistons, tandis que des ressorts suffisent à garder les pistons rétractés.

En particulier à l'arrêt, aucune pression n'est présente dans les carters. Les pistons 138 sont alors maintenus en position rentrés par les ressorts précités.

Comme on le voit sur la figure 1, les moteurs 130 et 140 sont reliés en parallèle. A cette fin, le circuit hydraulique 100 comprend une ligne haute pression 150 et une ligne basse pression 152. Une entrée de chaque moteur 130, 140 est reliée à la ligne haute pression 150, de préférence par l'intermédiaire d'un répartiteur diviseur de débit 154. La structure d'un tel diviseur de débit 154 est connue en soi de l'homme de l'art et ne sera pas décrite dans le détail par la suite.

Les sorties des moteurs 130, 140 sont également reliées en parallèle à la ligne basse pression 152.

Le circuit 100 comprend de plus une ligne retour 122 reliée à la ligne de retour 126 et au connecteur 33 destiné à être mis en prise avec le connecteur de retour 32.

Le circuit 100 comprend un distributeur 160 cinq voies, trois positions intercalé entre, d'une part la ligne d'alimentation 120 et la ligne de retour 122 et, d'autre part la ligne haute pression 150 et la ligne basse pression 152.

Les entrées 161, 162 du distributeur 160 sont reliées respectivement à la ligne d'alimentation 120 et à la ligne de retour 122.

Une première sortie 163 du distributeur 160 est reliée aux entrées des moteurs 130, 140, plus précisément à l'entrée du diviseur 154.

Une deuxième sortie 164 du distributeur 160 est reliée aux sorties des moteurs 130, 140.

La troisième sortie 165 du distributeur 160 est reliée à la ligne de retour 122 par une conduite 166.

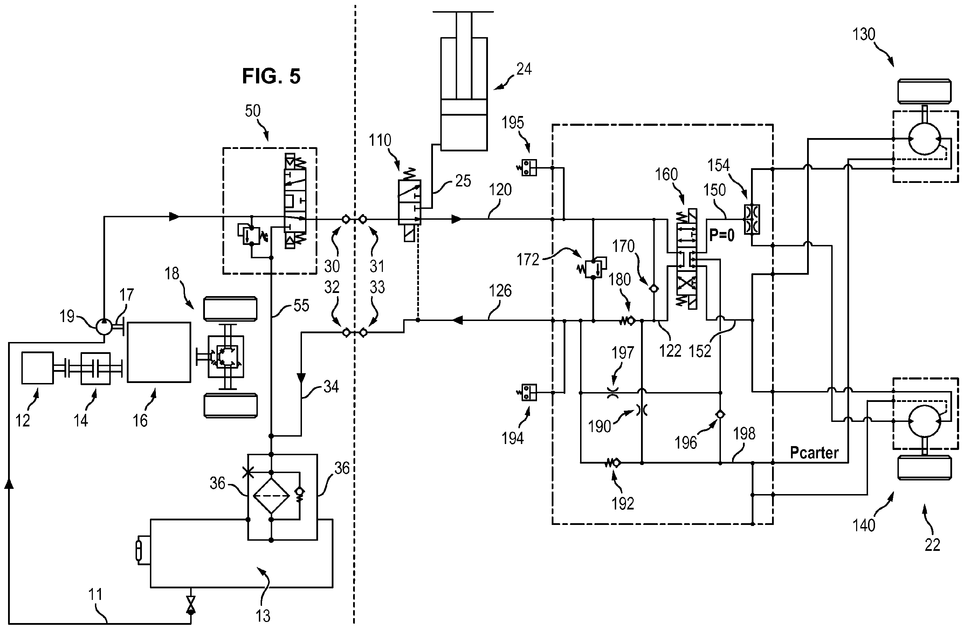

Dans une première position, de repos, les deux entrées 161, 162 du distributeur 160 sont reliées entre elles comme on le voit sur la figure 5 et les trois sorties 163, 164, 165 du même distributeur 160 sont également reliées entre elles. Dans cette position, le circuit d'assistance est court-circuité. Lorsque l'assistance est sélectionnée mais non activée, et donc que l'alimentation du vérin 24 n'est pas sélectionnée, l'huile pompée par la pompe 19 est retournée au réservoir 13 par les lignes de retour 122, 126. Les conduits d'alimentation et de retour des moteurs 130, 140 ne sont pas alimentés, et sont reliés au réservoir d'huile sans pression 13. En effet les lignes haute pression 150 et basse pression 152 sont reliées au réservoir 13 par l'intermédiaire de la sortie 165 et de la conduite 166 qui forme une ligne de vidange des moteurs.

Cependant comme on le comprendra à la lecture de la description qui va suivre il règne dans le carter des moteurs 130 et 140 une pression provenant de la restriction 190 et limitée par le clapet de fuite 192. La pression régnant ainsi dans les carters des moteurs 130 et 140 est à 1,5bar lorsque le clapet de fuite 192 est ainsi taré à 1,5bar.

Cette pression régnant dans les carters des moteurs 130 et 140 est alors supérieure à la pression régnant dans les cylindres des moteurs (qui est pratiquement nulle) mais inférieure à la pression appliquée sur le conduit d'alimentation 120.

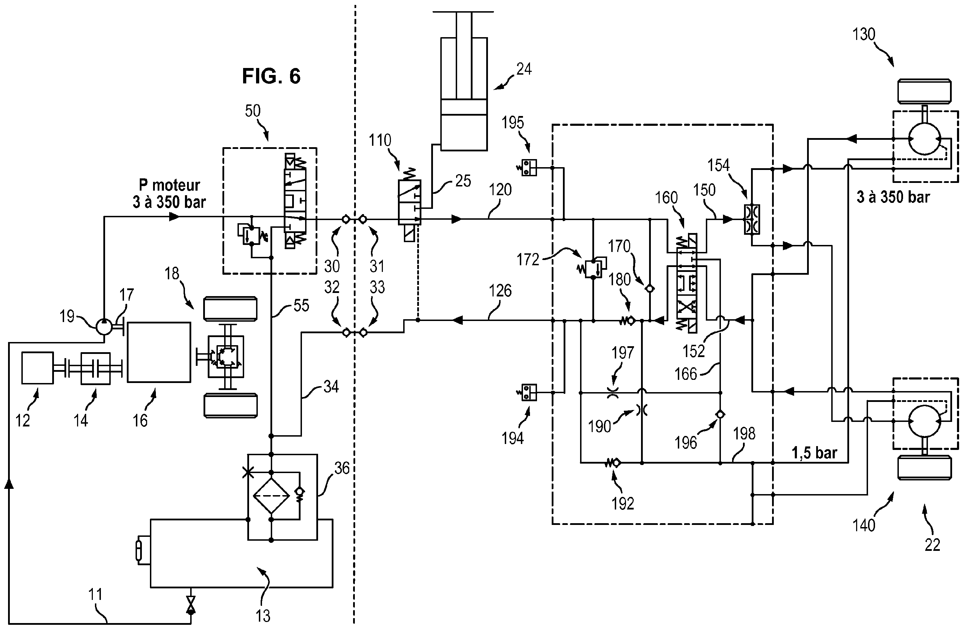

Dans une deuxième position du distributeur 160 comme illustré sur la figure 6, la première entrée 161 est reliée à la sortie 163 et la deuxième entrée 162 est reliée à la deuxième sortie 164. Les moteurs 130, 140 sont alors alimentés par la pompe 19 par l'intermédiaire des conduits 120, 122 dans le sens avant correspondant à un premier sens de rotation de moteur.

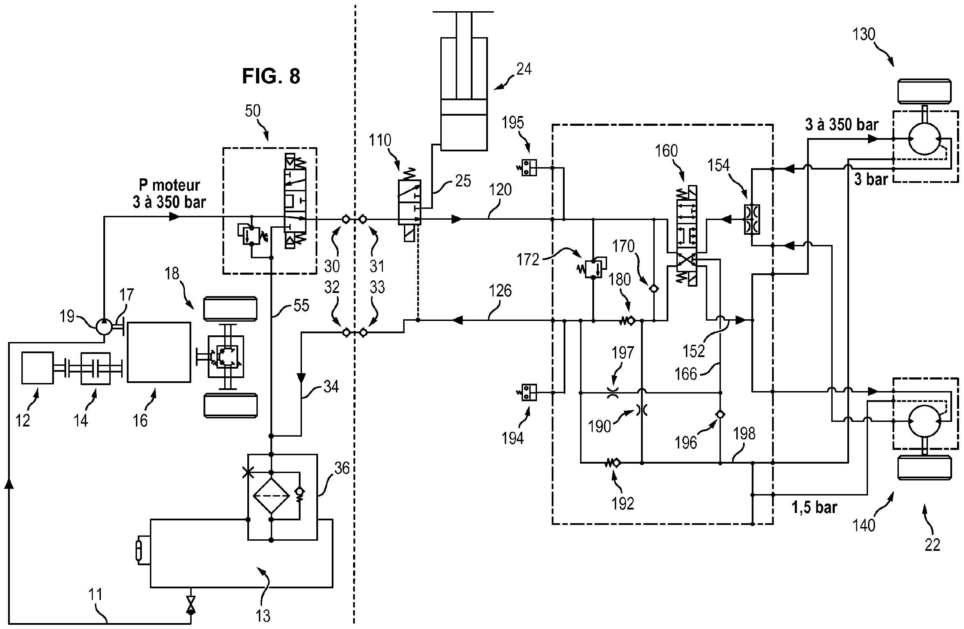

Au contraire, dans la troisième position du distributeur 160 comme illustré sur la figure 8, la première entrée 161 est reliée à la deuxième sortie 164 et la deuxième entrée 162 est reliée à la première sortie 163. Les moteurs 130, 140 sont alors entraînés dans le sens de rotation opposé, en marche arrière.

Le circuit 100 représenté sur les figures 1 et 2 comprend également un clapet anti-retour 170 placé entre la ligne d'alimentation 120 et la ligne de retour 122. Le clapet 170 est bloquant dans le sens allant de la ligne d'alimentation 120 vers la ligne de retour 122. Il est au contraire passant dans le sens allant de la ligne de retour 122 vers la ligne d'alimentation 120. Le clapet 170 est de préférence taré à 0 bar.

Le clapet 170 est un clapet de recirculation utile dans le cas où la vitesse du véhicule dépasse la vitesse maximale admissible par le système de transmission hydraulique par exemple quand la vitesse correspond à un débit supérieur au débit de la pompe.

Un limiteur de pression 172 est placé entre la ligne d'alimentation 120 et la ligne de retour 122. A titre d'exemple non limitatif, le limiteur de pression 172 peut être taré à 350 bars. Il permet de limiter la pression sur la ligne haute pression 150 en évacuant, vers le réservoir 13, toute pression additionnelle.

Selon l'invention, il est prévu en outre entre le point de liaison du limiteur de pression 172 sur la ligne de retour 122 et le distributeur 160, un élément 180 formant restriction. Cet élément formant restriction 180 est associé à des moyens de repiquage adaptés pour relier la partie du conduit de retour 122 située en amont de l'élément formant restriction 180 et appliquer au carter des moteurs 130, 140, à partir de ce conduit de retour 122, une pression inférieure à la pression de ce conduit de retour 122.

L'élément 180 peut être taré par exemple à 3 bars.

De préférence comme illustré sur les figures annexées, les moyens de repiquage précités comprennent un piquage de débit sur le conduit de retour 122 qui comporte une restriction de limitation secondaire 190 et un clapet de fuite 192.

La restriction 180 est formée par exemple d'un clapet taré à 6 bars passant dans le sens allant vers le réservoir 13.

En variante, la restriction 180 peut être formée d'un gicleur, d'une simple restriction, d'un limiteur de pression, ou de tout moyen équivalent définissant une perte de charge.

Le circuit peut être commandé par un capteur de température 194 mesurant la température sur la ligne de retour 122 en aval de la restriction 180 et un capteur de pression 195 mesurant la pression de l'huile dans le circuit, par exemple au niveau du conduit d'alimentation 120.

L'information issue du capteur de température 194 permet au calculateur du système de forcer le désengagement de l'assistance dans le cas où la température est supérieure à un seuil fixé.

Le capteur de pression 195 permet de détecter et forcer le désengagement du système d'assistance si le débit imposé par la vitesse de rotation des roues est supérieur à celui que peut fournir la pompe 19. Cet état est détecté par le capteur 195 puisque un débit imposé par une vitesse de rotation des roues supérieur à celui que peut fournir la pompe 19 entraîne une chute de pression dans la branche d'alimentation.

La restriction secondaire 190 relie le tronçon du conduit de retour 122 situé en amont de la restriction principale 180, à l'entrée 198 des carters de moteurs 130, 140.

Le clapet de fuite 192 est placé entre le côté de la restriction secondaire 190 opposé au conduit de retour 122 et le conduit de retour 126 qui débouche sur le connecteur 33. Il est passant dans le sens allant vers le connecteur 33.

Une telle restriction 190 peut être formée soit par la ligne de liaison qui conduit du conduit de retour 122 à l'entrée de fuite 192 si cette ligne de liaison correspond à une perte de charge suffisante, soit par une restriction rajoutée sur cette ligne de liaison. Dans ce dernier cas la restriction 190 peut être formée par exemple et non limitativement par un gicleur ou une réduction locale de diamètre de la ligne de liaison.

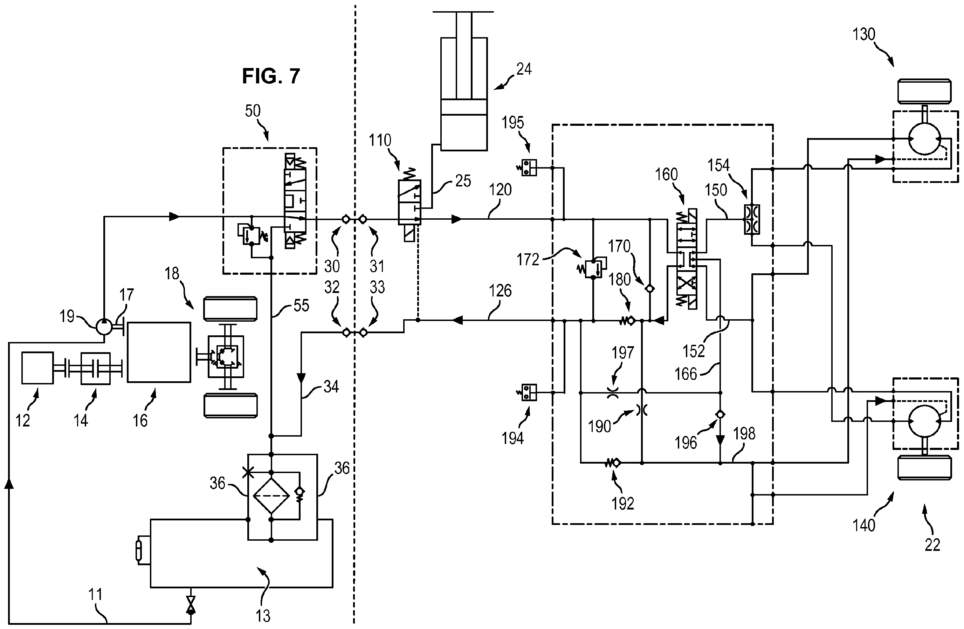

La restriction 180 permet de créer une pression de commande des carters moteurs sans nécessiter l'utilisation d'une pompe de gavage, ou d'une pompe auxilliaire, dans la configuration représentée sur la figure 7. Cette pression de carter permet de placer les pistons 138 en position rétractée dans les cylindres 137. Ceci permet que le rotor 136 des moteurs 130, 140 tourne par rapport au stator sans générer de couple de sortie, correspondant à une position « roue libre ». Suivant que les pistons sont rétractés ou au contact de la came, le moteur est dit désengagé ou engagé, ou décraboté et craboté, les pistons réalisant avec la came une fonction de doigts de crabot.

Le clapet de fuite 192 peut être par exemple taré à 1,5 bar, pour appliquer une telle pression sur le carter des moteurs 130, 140, pour une pression sur le conduit d'alimentation 120 de l'ordre de 3 à 6 bars et une pression sur le conduit de retour des moteurs de l'ordre de 6 bars.

Le clapet de fuite 192 permet de maintenir les carters des moteurs 130, 140 sous pression permanente.

Le contrôle de la pression dans les carters des moteurs peut permettre un contrôle progressif de l'évolution de la pression appliquée sur les pistons et peut permettre par conséquent d'éviter tout claquement des pistons et galets 135 sur la came multi-lobée 132 lors de l'embrayage.

L'homme de l'art comprendra donc que la restriction 180 conforme à l'invention permet de créer une pression adéquate dirigée vers les carters du moteur, qui est particulièrement utile lors de l'engagement ou du désengagement des moteurs.

La pression appliquée en permanence sur les carters des moteurs, inférieure à la pression minimale de retour des moteurs, ne perturbe pas le maintien des pistons en position bien appuyée sur la came lorsque le moteur est en assistance, tout en maintenant au contraire les pistons rentrés lorsque la pression sur les lignes d'alimentation et de retour des moteurs chute.

On a décrit précédemment l'invention en référence à l'application à une remorque 20 destinée à être tractée par un véhicule tracteur 10 et comportant un circuit d'assistance à l'entraînement. Le véhicule tracteur est par exemple un tracteur de camion articulé ou semi-remorque.

L'invention n'est pas cependant limitée à l'application à une remorque. L'invention peut s'appliquer à l'assistance à l'entraînement de tout véhicule sans remorque, par exemple par l'entrainement d'un essieu non motorisé d'un véhicule. D'une manière préférée, le circuit de l'invention s'applique particulièrement bien aux moteurs à pistons radiaux et came multilobe débrayables par rétractation des pistons dans le bloc, et tournant à la vitesse de l'arbre qu'ils entrainent, et en particulier tournant à la vitesse des roues, ou à la vitesse de l'arbre d'entrée d'un essieu.

Comme on le voit sur les figures annexées, de préférence le circuit hydraulique comprend en outre un clapet de recirculation 196 qui relie la sortie 165 du distributeur 160 et la ligne reliée au carter des moteurs 130, 140.

Le clapet de recirculation 196 est passant dans le sens allant de la sortie 165 du distributeur 160 vers la ligne reliée au carter des moteurs 130, 140. Ce clapet est un simple clapet antiretour, cependant, pour des raisons de stabilité et d'étanchéité en fonctionnement, on peut choisir un clapet équipé d'une ressort faiblement taré. D'une manière préférée, Il est taré à une valeur inférieure à la pression régnant dans les conduits d'alimentation et de retour des moteurs 130 et 140 au moment de la rentrée des pistons, quand le distributeur 160 est en position centrale de court-circuit des moteurs, par exemple taré à 0,3 bar. Idéalement le tarage du clapet de recirculation 196 est le plus faible possible pour ne pas perturber l'effet de ressorts configurés pour assurer le décrabotage des pistons.

Ainsi le clapet de recirculation 196 relie les lignes d'alimentation 150 et de retour 152 des moteurs 130, 140, au carter des moteurs, en position non alimentée des moteurs.

Le clapet de recirculation 196 permet de diriger vers le carter des moteurs 130, 140 l'huile qui est refoulée par le déplacement des pistons 138 par la came 132. L'on évite ainsi que si les pistons 138 tendent à rentrer lentement dans le bloc cylindres lors de la désactivation des moteurs, car le débit venant de la pompe ne suffit pas à remplir les carters des moteurs 130, 140 assez vite, les pistons 138 partiellement rentrés ne tapent sur la came 132.

Grâce au clapet de recirculation 196, si la came 132 chasse des pistons 138, l'excès de pression locale des lignes alimentation et retour des moteurs est évacué vers le carter des moteurs, par l'intermédiaire du clapet 196, puisque dans cet état les sorties 163, 164 et 165 du distributeur 160 sont reliées entre elles. Le carter des moteurs 130, 140 se remplit ainsi instantanément quand les pistons 138 rentrent dans le bloc cylindres. L'huile qui est évacuée d'un côté d'un piston 138 se retrouve dans le carter de l'autre côté. Le système fonctionne à équivolume d'huile déplacée.

Ainsi grâce au clapet de recirculation 196 tous les pistons 138 sont rentrés par la came 132 et ne risquent pas de ressortir sur une fraction de tour. Le carter est instantanément rempli, sans attendre que de l'huile ne vienne depuis la pompe 19.

La pompe 19 sert essentiellement à maintenir la pression de carter souhaitée dans les moteurs pour garder les pistons 138 en position rétractée.

L'on aperçoit également, sur les figures annexées, sur le tronçon de ligne qui relie la troisième sortie 165 du distributeur 160 à la ligne de retour 126, et en aval du clapet de recirculation 196, une restriction 197.

La restriction 197 est ainsi placée sur un tronçon de ligne situé entre l'entrée du clapet de recirculation 196 et la ligne de retour 126.

Cette restriction 197 a pour fonction de créer une perte de charge qui permet une montée en pression temporaire sur l'entrée du clapet de recirculation 196, au moment de la mise en court circuit des moteurs par le distributeur 160 et ainsi faire passer l'huile refoulée par les moteurs 130, 140 par le clapet de recirculation 196.

Une telle restriction 197 peut être formée soit par la ligne de liaison qui conduit de la sortie 165 du distributeur 160 à la ligne de retour 126 si cette ligne de liaison correspond à une perte de charge suffisante, soit par une restriction rajoutée sur cette ligne de liaison. Dans ce dernier cas la restriction 197 peut être formée par exemple et non limitativement par un gicleur ou une réduction locale de diamètre de la ligne de liaison, c'est-à-dire un étranglement.

L'on observera que le volume d'huile expulsé pour rentrer les pistons 138 étant égal au volume injecté dans le carter des moteurs 130, 140, la restriction ou perte de charge 197 ne gêne en rien la rétractation des pistons 138 puisqu'il n'y a pratiquement pas de débit d'huile dans cette ligne lors de la phase de rétractation des pistons.

L'homme de l'art comprendra que la présente invention offre de nombreux avantages par rapport à l'état de la technique.

Le circuit hydraulique d'assistance à l'entraînement conforme à l'invention est simple et économique. Il permet de réutiliser le circuit connu de véhicules existants équipés de moyens pour assurer un bennage, disponibles sur un tracteur.

Le circuit de l'invention autorise également une position roue libre. Le système conforme à l'invention ne nécessite que deux lignes de liaison. Le système conforme à l'invention permet de disposer d'une assistance à l'entraînement par un ajout simple sur un système connu existant sur un véhicule tracteur sans avoir d'impact sur l'équipement pré-existant notamment destiné à un bennage, celui-ci restant fonctionnel.

L'invention permet un parfait contrôle de sécurité.

En outre, sans exiger de pompe de gavage ou auxilliaire, la présente invention permet en recréant une pression appliquée au carter de moteurs, un engagement silencieux lorsque les galets 135 sont déplacés en appui contre la came multi-lobes 132, tout en autorisant un désengagement rapide grâce à la pression carter.

Le système d'assistance décrit dans la présente demande et basé sur les moteurs 130, 140 peut être placé sur d'autres roues que celles d'une remorque. Il peut, en utilisant la pompe 19 d'accessoires hydrauliques en boucle ouverte, être associé par exemple à des essieux porteurs d'un camion, notamment un essieu avant directionnel, de multiples essieux directionnels, des essieux relevables, etc ...

## Revendications

1. Système d'assistance à l'entraînement d'un véhicule comprenant au moins une machine hydraulique formant pompe (19), au moins une machine hydraulique formant moteur (130, 140) et un circuit hydraulique (100) comprenant un conduit d'alimentation (15) allant de la sortie de la pompe (19) vers l'entrée de la machine hydraulique formant moteur (130, 140) et un conduit de retour (122) lié à la sortie de la machine hydraulique formant moteur (130, 140),
**caractérisé par le fait que** le circuit hydraulique est un circuit ouvert passant par un réservoir (13), que le circuit hydraulique comprend un conduit d'aspiration (11) allant du réservoir (13) vers une entrée de la pompe (19), et le conduit de retour (122) va de la sortie de la machine hydraulique formant moteur (130, 140) vers le réservoir (13), et qu'au moins l'un des moteurs (130, 140) est un moteur débrayable et **par le fait que** le système comprend un élément formant restriction (180) et créant une perte de charge sur le conduit retour et un moyen (190, 192) adapté pour relier au carter du moteur, la partie du conduit retour (122) située en amont de l'élément formant restriction (180) et appliquer au carter du moteur, à partir du conduit de retour (122), une pression inférieure à la pression de ce conduit de retour.

2. Système selon la revendication 1, **caractérisé par le fait que** l'élément formant restriction (180) est un clapet anti-retour taré à 6 Bar passant dans le sens allant vers le réservoir (13).

3. Système selon l'une des revendications 1 ou 2, **caractérisé par le fait que** l'élément formant restriction (180) est choisi dans le groupe comprenant un gicleur, une restriction, ou un limiteur de pression.

4. Système selon l'une des revendications 1 à 3, **caractérisé par le fait que** le moyen adapté pour relier la partie du conduit de retour (122) située en amont de l'élément formant restriction (180) et appliquer au carter du moteur, à partir de ce conduit de retour, une pression inférieure à la pression de ce conduit de retour, comprend un piquage de débit sur le conduit de retour qui comporte une restriction de limitation secondaire (190) et un clapet de fuite (192).

5. Système selon la revendication 4, **caractérisé par le fait que** la restriction de limitation secondaire (190) est placée entre le conduit de retour (122) et le carter du moteur et que le clapet de fuite (192) est placé entre la sortie de la restriction de limitation secondaire (190) et le conduit de retour (126) ou le réservoir (13).

6. Système selon l'une des revendications 1 à 5, **caractérisé par le fait que** la pression du fluide appliquée sur le carter des moteurs (130, 140) assure le maintien en position rétractée des pistons (138) dans leur cylindre respectif (137).

7. Système selon l'une des revendications 1 à 6, **caractérisé par le fait qu'**il comprend un limiteur de pression (172) placé entre la ligne d'alimentation (120) et la ligne de retour (122).

8. Système selon l'une des revendications 1 à 7, **caractérisé par le fait qu'**il comprend un clapet anti-retour (170), de préférence taré à 0 bar, connecté entre une ligne d'alimentation (120) et une ligne de retour (122) et passant dans le sens allant vers la ligne d'alimentation (120).

9. Système selon l'une des revendications 1 à 8, **caractérisé par le fait qu'**il est installé sur une remorque et adapté pour être relié par l'intermédiaire de connecteurs appropriés (31, 33) à une pompe (19) placée sur un véhicule tracteur (10).

10. Système selon l'une des revendications 1 à 9, **caractérisé par le fait que** la machine hydraulique formant moteur est de type à pistons radiaux et came multilobe, débrayable par désengagement des pistons et de la came.

11. Système selon l'une des revendications 1 à 10, **caractérisé par le fait qu'**il comprend un distributeur (160) trois positions adapté pour assurer l'alimentation de la machine hydraulique formant moteur (130, 140) dans un premier sens, l'alimentation du même moteur (130, 140) dans le sens opposé et pour définir une position de non alimentation du moteur (130, 140) correspondant à une position en roue libre.

12. Système selon l'une des revendications 1 à 11, **caractérisé par le fait qu'**il comprend un clapet de recirculation (196) qui relie les lignes d'alimentation et de retour de la machine hydraulique formant moteur, au carter du moteur, en position non alimentée du moteur.

13. Système selon la revendication 12, **caractérisé par le fait qu'**il comprend une restriction (197) sur un tronçon de ligne situé entre l'entrée du clapet de recirculation (196) et une ligne de retour (126).

14. Procédé de gestion du système d'assistance à l'entraînement conforme à l'une des revendications 1 à 13, **caractérisé par le fait qu'**il comprend l'étape consistant à relier le carter de la machine hydraulique formant moteur au conduit de retour, en amont de l'élément formant restriction et créant une perte de charge sur le conduit de retour, par l'intermédiaire d'un élément permettant d'appliquer au carter du moteur, à partir du conduit de retour, une pression inférieure à la pression de ce conduit de retour.

15. Procédé selon la revendication 14, **caractérisé par le fait que** l'étape consistant à relier le carter de la machine hydraulique formant moteur au conduit de retour, en amont de l'élément formant restriction, est opérée par l'intermédiaire d'un piquage de débit sur le conduit de retour qui comporte une restriction de limitation secondaire et un clapet de fuite.

16. Véhicule équipé d'un système conforme à l'une des revendications 1 à 13.

## Patentansprüche

1. System zur Unterstützung des Antriebs eines Fahrzeugs, das mindestens eine hydraulische Maschine, die eine Pumpe (19) bildet, mindestens eine hydraulische Maschine, die einen Motor (130, 140) bildet, und einen hydraulischen Kreislauf (100) umfasst, der eine Versorgungsleitung (15), die von dem Ausgang der Pumpe (19) hin zum Eingang der hydraulischen Maschine verläuft, die den Motor (130, 140) bildet, und eine Rückleitung (122) umfasst, die mit dem Ausgang der hydraulischen Maschine verbunden ist, die den Motor (130, 140) bildet,
**dadurch gekennzeichnet, dass** der hydraulische Kreislauf ein offener Kreislauf ist, der durch einen Behälter (13) verläuft, dass der hydraulische Kreislauf eine Ansaugleitung (11) umfasst, die von dem Behälter (13) hin zu einem Eingang der Pumpe (19) verläuft, und die Rückleitung (122) von dem Ausgang der hydraulischen Maschine, die den Motor (130, 140) bildet, hin zu dem Behälter (13) verläuft, und dass mindestens einer der Motoren (130, 140) ein ausrückbarer Motor ist, und dadurch, dass das System ein Element, das eine Drosselung (180) bildet und einen Druckverlust auf der Rückleitung erzeugt, und ein Mittel (190, 192) umfasst, das dazu geeignet ist, den Teil der Rückleitung (122), der sich dem Element vorgelagert befindet, das die Drosselung (180) bildet, mit dem Motorgehäuse zu verbinden und ausgehend von der Rückleitung (122) auf das Gehäuse des Motors einen Druck anzuwenden, der niedriger als der Druck dieser Rückleitung ist.

2. System nach Anspruch 1, **dadurch gekennzeichnet, dass** das Element, das die Drosselung (180) bildet, ein Rückschlagventil ist, das auf 6 Bar tariert ist und in der Richtung verläuft, die hin zu dem Behälter (13) führt.

3. System nach einem der Ansprüche 1 oder 2, **dadurch gekennzeichnet, dass** das Element, das die Drosselung (180) bildet, aus der Gruppe ausgewählt ist, die eine Düse, eine Drosselung oder einen Druckbegrenzer umfasst.

4. System nach einem der Ansprüche 1 bis 3, **dadurch gekennzeichnet, dass** das Mittel, das dazu geeignet ist, den Teil der Rückleitung (122), der sich dem Element vorgelagert befindet, das die Drosselung (180) bildet, zu verbinden und auf das Gehäuse des Motors ausgehend von dieser Rückleitung einen Druck auszuüben, der niedriger als der Druck dieser Rückleitung ist, eine Abzweigung auf der Rückleitung umfasst, die eine Nebeneinschränkungsdrosselung (190) und ein Ausströmungsventil (192) umfasst.

5. System nach Anspruch 4, **dadurch gekennzeichnet, dass** die Nebeneinschränkungsdrosselung (190) zwischen der Rückleitung (122) und dem Gehäuse des Motors platziert ist und dass das Ausströmungsventil (192) zwischen dem Ausgang der Nebeneinschränkungsdrosselung (190) und der Rückleitung (126) oder dem Behälter (13) platziert ist.

6. System nach einem der Ansprüche 1 bis 5, **dadurch gekennzeichnet, dass** der auf das Gehäuse der Motoren (130, 140) angewandte Druck des Fluids das Halten der Kolben (138) in der zurückgezogenen Position in ihrem jeweiligen Zylinder (137) gewährleistet.

7. System nach einem der Ansprüche 1 bis 6, **dadurch gekennzeichnet, dass** es einen Druckbegrenzer (172) umfasst, der zwischen der Versorgungsleitung (120) und der Rückleitung (122) platziert ist.

8. System nach einem der Ansprüche 1 bis 7, **dadurch gekennzeichnet, dass** es ein Rückschlagventil (170) umfasst, das vorzugsweise auf 0 Bar tariert ist und zwischen einer Versorgungsleitung (120) und einer Rückleitung (122) verbunden ist und in der Richtung verläuft, die hin zur Versorgungsleitung (120) führt.

9. System nach einem der Ansprüche 1 bis 8, **dadurch gekennzeichnet, dass** es an einem Anhänger eingerichtet ist und dazu geeignet ist, über geeignete Verbinder (31, 33) mit einer Pumpe (19) verbunden zu sein, die auf einem Zugfahrzeug (10) platziert ist.

10. System nach einem der Ansprüche 1 bis 9, **dadurch gekennzeichnet, dass** die hydraulische Maschine, die den Motor bildet, vom Typ mit radialen Kolben und mehrlappigem Nocken ist und durch Außereingriffbringen der Kolben und des Nockens ausrückbar ist.

11. System nach einem der Ansprüche 1 bis 10, **dadurch gekennzeichnet, dass** es einen Dreipositionsverteiler (160) umfasst, der dazu geeignet ist, die Versorgung der hydraulischen Maschine, die den Motor (130, 140) bildet, in einer ersten Richtung und die Versorgung desselben Motors (130, 140) in der entgegengesetzten Richtung zu gewährleisten und eine Position zur Nichtversorgung des Motors (130, 140) zu definieren, die einer Position im Freilauf entspricht.

12. System nach einem der Ansprüche 1 bis 11, **dadurch gekennzeichnet, dass** es ein Rückführungsventil (196) umfasst, das die Versorgungs- und Rückleitungen der hydraulischen Maschine, die den Motor bildet, mit dem Gehäuse des Motors in der nicht versorgten Position des Motors verbindet.

13. System nach Anspruch 12, **dadurch gekennzeichnet, dass** es eine Drosselung (197) auf einem Leitungsabschnitt umfasst, der sich zwischen dem Eingang des Rückführungsventils (196) und einer Rückleitung (126) befindet.

14. Verfahren zur Verwaltung eines Systems zur Unterstützung des Antriebs nach einem der Ansprüche 1 bis 13, **dadurch gekennzeichnet, dass** es den Schritt umfasst, der darin besteht, das Gehäuse der hydraulischen Maschine, die den Motor bildet, dem Element, das die Drosselung bildet, vorgelagert mit der Rückleitung zu verbinden, und über ein Element, das ausgehend von der Rückleitung das Anwenden eines Drucks auf das Gehäuse des Motors ermöglicht, der niedriger als der Druck der Rückleitung ist, einen Druckverlust auf der Rückleitung erzeugt.

15. Verfahren nach Anspruch 14, **dadurch gekennzeichnet, dass** der Schritt, der darin besteht, das Gehäuse der hydraulischen Maschine, die den Motor bildet, dem Element, das die Drosselung bildet, vorgelagert mit der Rückleitung zu verbinden, über eine Abzweigung auf der Rückleitung betätigt wird, die eine Nebeneinschränkungsdrosselung und ein Ausströmungsventil umfasst.

16. Fahrzeug, das mit einem System nach einem der Ansprüche 1 bis 13 ausgerüstet ist.

## Claims

1. A vehicle drive assistance system comprising at least one hydraulic machine forming a pump (19), at least one hydraulic machine forming a motor (130, 140) and a hydraulic circuit (100) comprising a supply duct (15) running from the outlet of the pump (19) to the inlet of the hydraulic machine forming the motor (130, 140) and a return duct (122) related to the outlet of the hydraulic machine forming the motor (130, 140),
**characterized in that** the hydraulic circuit is an open circuit passing through a tank (13), **in that** the hydraulic circuit comprises a suction duct (11) running from the tank (13) to an inlet of the pump (19), and the return duct (122) runs from the outlet of the hydraulic machine forming the motor (130, 140) to the tank (13), and **in that** at least one of the motors (130, 140) is a releasable motor and **in that** the system comprises an element forming a restriction (180) and creating a pressure drop on the return duct and a means (190, 192) adapted to connect to the motor casing the part of the return duct (122) located upstream of the element forming the restriction (180) and apply to the motor casing, from the return duct (122), a pressure lower than the pressure of this return duct.

2. The system according to claim 1, **characterized in that** the element forming the restriction (180) is a check valve calibrated at 6 Bar passing in the direction towards the tank (13).

3. The system according to any of claim 1 or 2, **characterized in that** the element forming the restriction (180) is chosen from the group comprising a nozzle, a restriction or a pressure limiter.

4. The system according to any of claims 1 to 3, **characterized in that** the means adapted to connect the part of the return duct (122) located upstream of the element forming the restriction (180) and apply to the motor casing, from this return duct, a pressure lower than the pressure of this return duct, comprises a flow rate tapping on the return duct which includes a secondary limitation restriction (190) and a leak valve (192).

5. The system according to claim 4, **characterized in that** the secondary limitation restriction (190) is placed between the return duct (122) and the motor casing and that the leak valve (192) is placed between the outlet of the secondary limitation restriction (190) and the return duct (126) or the tank (13).

6. The system according to any of claims 1 to 5, **characterized in that** the fluid pressure applied on the motor casing (130, 140) maintains the retracted position of the pistons (138) in their respective cylinder (137).

7. The system according to any of claims 1 to 6, **characterized in that** it comprises a pressure limiter (172) placed between the supply line (120) and the return line (122).

8. The system according to any of claims 1 to 7, **characterized in that** it comprises a check valve (170), preferably calibrated at 0 bar, connected between a supply line (120) and a return line (122) and passing in the direction towards the supply line (120).

9. The system according to any of claims 1 to 8, **characterized in that** it is installed on a trailer and adapted to be connected via appropriate connectors (31, 33) to a pump (19) placed on a trailer vehicle (10).

10. The system according to any of claims 1 to 9, **characterized in that** the hydraulic machine forming the motor is of the type with radial pistons and multilobe cam, releasable by disengagement of the pistons and the cam.

11. The system according to any of claims 1 to 10, **characterized in that** it comprises a three-position distributor (160) adapted to supply the hydraulic machine forming the motor (130, 140) in a first direction, supply the same motor (130, 140) in the opposite direction and define a position where the motor (130, 140) is not supplied corresponding to a freewheel position.

12. The system according to any of claims 1 to 11, **characterized in that** it comprises a recirculation valve (196) which connects the supply and return lines of the hydraulic machine forming the motor, to the motor casing, in the non-supplied position of the motor.

13. The system according to claim 12, **characterized in that** it comprises a restriction (197) on a line section located between the inlet of the recirculation valve (196) and a return line (126).

14. A method for managing the drive assistance system in accordance with any of claims 1 to 13, **characterized in that** it comprises the step of connecting the casing of the hydraulic machine forming the motor to the return duct, upstream of the element forming the restriction and creating a pressure drop on the return duct, via an element that allows applying to the motor casing, from the return duct, a pressure lower than the pressure of this return duct.

15. The method according to claim 14, **characterized in that** the step of connecting the casing of the hydraulic machine forming the motor to the return duct, upstream of the element forming the restriction, is carried out by means of a flow rate tapping on the return duct which includes a secondary limitation restriction and a leak valve.

16. A vehicle equipped with a system in accordance with any of claims 1 to 13.
